# EUROPEAN PATENT SPECIFICATION

(11) **EP 1 881 209 B1**
(45) Date of publication and mention of the grant of the patent: **08.10.2008**
(21) Application number: 06360031.6
(22) Date of filing: 20.07.2006
(51) Int. Cl.: F16B 25/00

(54) **Wood screw with cutting teeth on threads and groove in shank**
Holzschraube mit Schneidzähnen auf dem Gewinde und mit einem Schaft mit Nuten
Vis a bois avec dents coupantes sur des fils et tige avec des rainures

(43) Date of publication of application: 23.01.2008
(73) Proprietor: Hsu, Kuo-Tai, Yong Kang City T'ai nan (TW)
(72) Inventor: Hsu, Kuo-Tai, Yong Kang City T'ai nan (TW)
(74) Representative: Metz, Paul

(56) References cited:
- GB-A- 2 304 849
- GB-B- 2 359 603
- US-A- 6 056 491
- US-B2- 6 789 991

## Description

### BACKGROUND OF THE INVENTION

### 1. Field of the Invention

The present invention relates to a wood screw which includes teeth on the threads of the screw-in portion and a groove in the shank so as to be quickly screwed in an object and the debris can be removed efficiently.

### 2. Description of the Prior Art

Applicant's former U.S. Pat No. 6,789,991 discloses a screw that has spirally arranged cutting trenches defined in the shank of the screw and the trenches are located between the threads. The cutting trenches improve cutting the texture of the object so that the screw can be quickly screwed into the object. However, during the first stage of screwing, the screw lacks strong and sufficient cutting edges so that the user has to apply a large force to force the screw into the object. The texture of the object might clamp the thin threads and break the threads. Besides, the debris of the object applies a transverse force which might cause cracks to the object. U.S. Pat. No. 6,056,491 discloses a screw that has cutting teeth formed on the threads and the cutting teeth are helpful at the first screwing stage.

Furthermore, GB-B-2 359 603 discloses a wood screw comprising a head and a shank connected to the head, whereby the shank includes a screw-in portion which includes a tapered section and a tip point at a distal end of the tapered section, a plurality of threads formed on an outer periphery of the shank including the screw-in portion, a plurality of cutting teeth formed on the threads on the screw-in portion, a plurality of guide projections extending from an outer periphery of the shank and located between the threads. Nevertheless, the debris cannot be quickly removed from the bore formed by the screw, especially when the flat section of the screw penetrates into the object.

The present invention intends to provide a wood screw that has cutting teeth formed on the threads of the screw-in portion of the shank so as to quickly screw into the object, and a groove is defined in the shank and provides a sufficient space for removing the debris during screwing.

### SUMMARY OF THE INVENTION

The present invention relates to a wood screw that comprises a head and a shank which includes a screw-in portion including a tapered section and a tip point at a distal end of the tapered section. A groove is defined longitudinally in the shank and two cutting edges are formed on two sides of the groove. A plurality of threads are formed on an outer periphery of the shank including the screw-in portion. A plurality of cutting teeth are formed on the threads on the screw-in portion. A plurality of ribs extend from an outer periphery of the shank and located between the threads.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 shows a side view of the wood screw of the present invention;
Fig. 2 is a perspective view to show the wood screw of the present invention;
Fig. 3 shows an enlarged cross sectional view along line P-P' of the wood screw of the present invention;
Fig. 4 shows that the wood screw is screwed into an object;
Fig. 5 shows that debris received in the groove of the wood screw of the present invention; and
Fig. 6 shows an enlarged view of the crest portions of the cutting teeth and the threads of the wood screw of the present invention.

### DETAILED DESCRIPTION OF THE PREFERRED EMBODIMENT

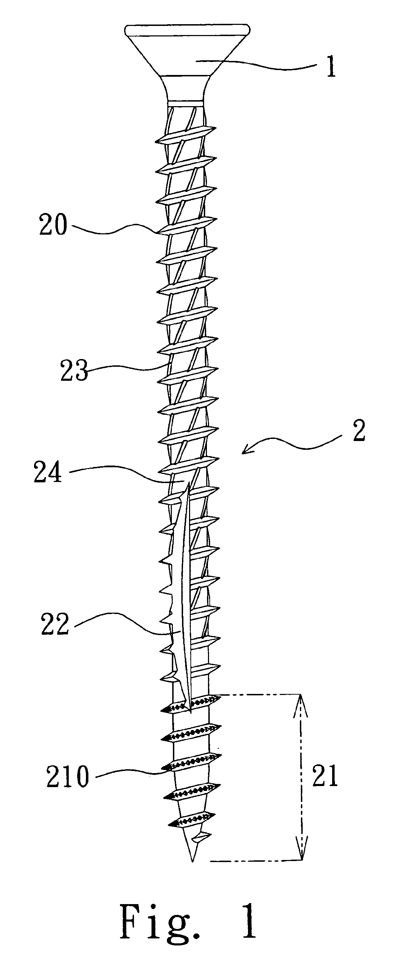

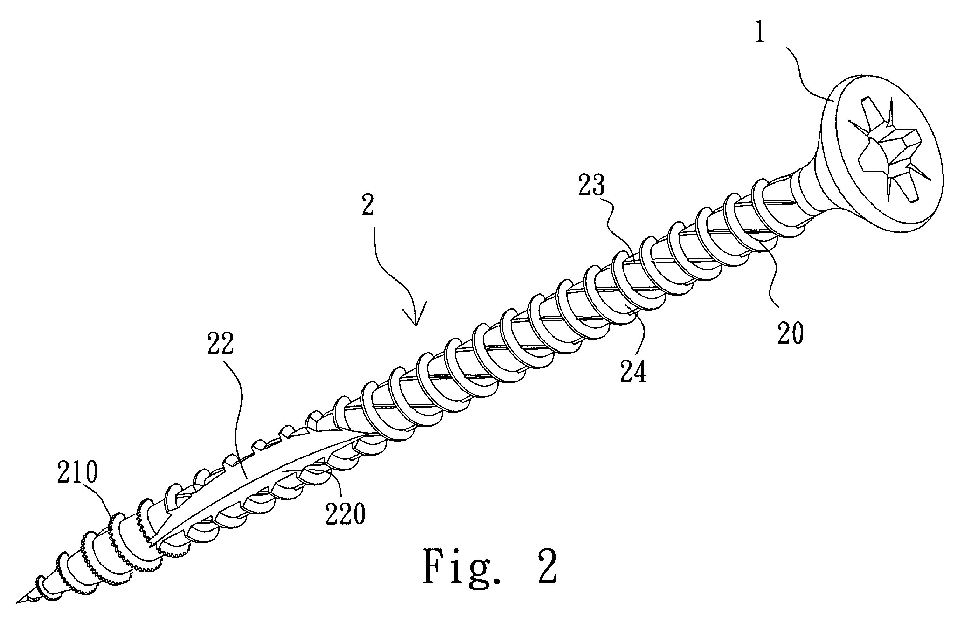

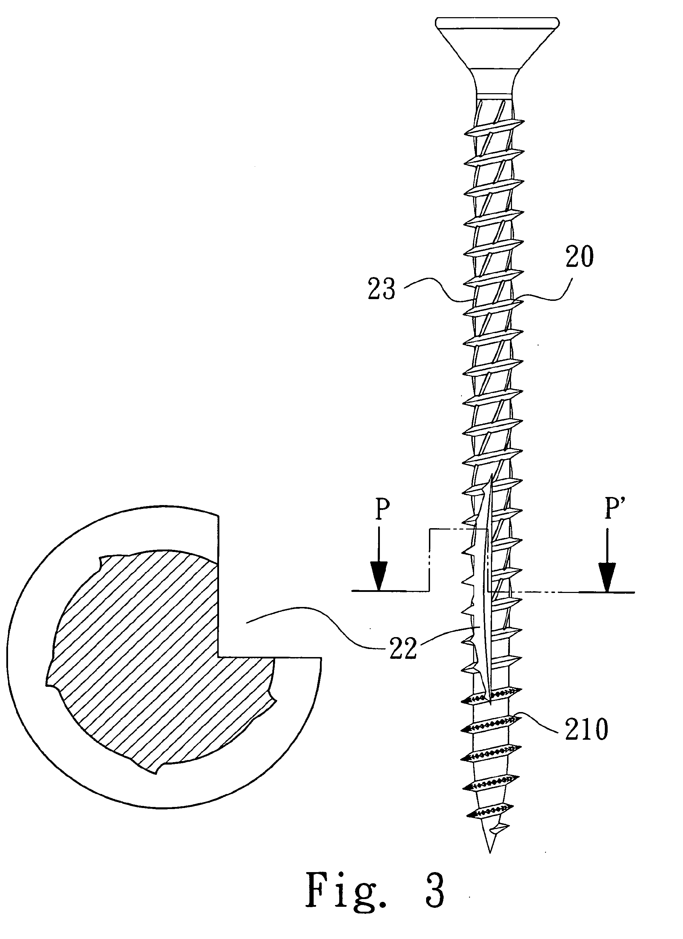

Referring to Figs. 1 to 3, the wood screw of the present invention comprises a head **1** and a shank **2** which has a first end connected with the head **1** and a screw-in portion **21** on a second end of the shank **2.** The screw-in portion **21** which includes a tapered section and a tip point at a distal end of the tapered section. A groove **22** is defined longitudinally in the shank **2** and two cutting edges **220** are formed on two sides of the groove **22.**

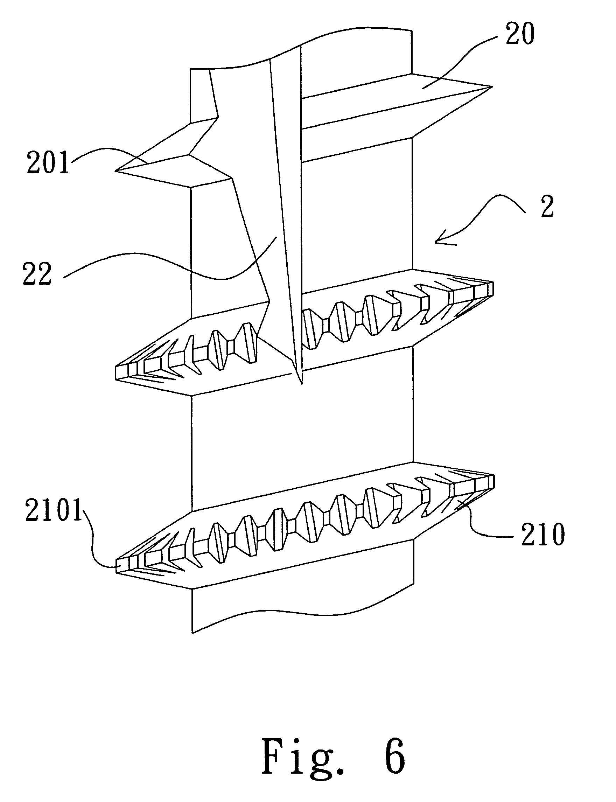

A plurality of threads **20** are formed on an outer periphery of the shank **2** including the screw-in portion **21.** A plurality of cutting teeth **210** are formed on the threads **20** on the screw-in portion **21.** The groove **22** starts from a far-most cutting teeth **210** from the tip point and extends toward the head **1.** A plurality of ribs **23** spirally extend from an outer periphery of the shank **2** and are located between the threads **20.** The ribs **23** start from the first end of the shank **2** and terminate before the screw-in portion **21.** As shown in Fig. 6, each cutting tooth **210** has a crest portion **2101** which is wider than a crest portion **201** of the threads **20.**

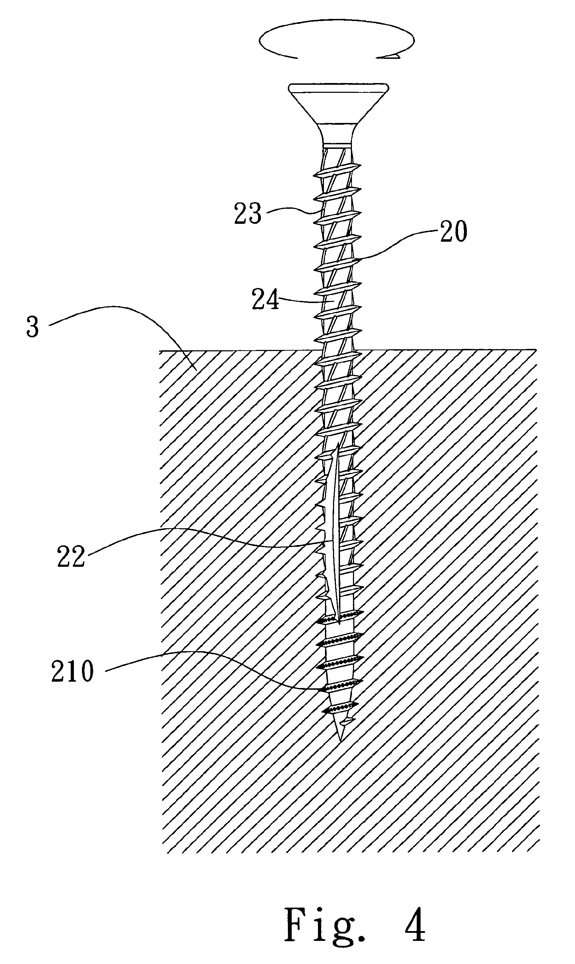

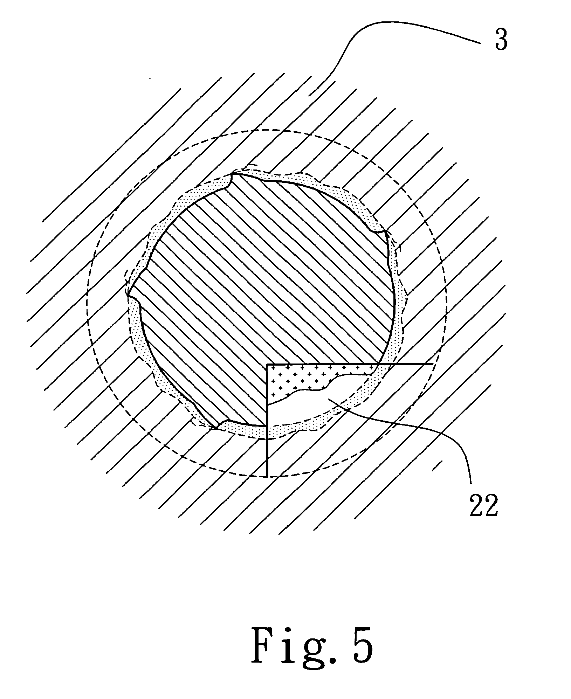

As shown In Figs. 4 and 5, when screwing the wood screw into an object **3,** the cutting teeth **210** of the threads **20** on the screw-in portion **21** can efficiently cut the fibers of the object **3** so as to easily screw the wood screw into the object **3.** The debris of the object **3** can be removed from the groove **22** and the cutting edges **220** of the groove **22** also assist the movement of the wood screw into the object **3.** By the specific design of the wood screw, the user can easily screw the wood screw into the object **3.** Besides, ribs **23** assist the shank **2** to penetrate into the object **3** and guide debris out from the bore that the wood screw made. The wider crest portions **2101** of the cutting teeth **210** prevent the cutting teeth **210** from being clamped and/or broken by the material of the object **3.**

While we have shown and described the embodiment in accordance with the present invention, it should be clear to those skilled in the art that further embodiments may be made without departing from the scope of the present invention, as defined by the appended claims.

## Claims

1. A wood screw comprising:
a head **(1)** and a shank **(2)** connected to the head **(1),** whereby the shank **(2)** includes a screw-in portion **(21)** which includes a tapered section and a tip point at a distal end of the tapered section, a plurality of threads **(20)** formed on an outer periphery of the shank **(2)** including the screw-in portion **(21),** a plurality of cutting teeth **(210)** formed on the threads **(20)** on the screw-in portion **(21),** a plurality of ribs **(23)** extending from an outer periphery of the shank **(2)** and located between the threads **(20),** and a groove **(22)** defined longitudinally in the shank **(2)** having two cutting edges **(220)** being formed on two sides of the groove **(22),** and **characterized in that** the groove **(22)** starts from a far-most cutting teeth **(210)** from the tip point and extends toward the head **(1).**

2. The wood screw as claimed in claim 1, **characterized in that** the ribs **(23)** extend spirally from the outer periphery of the shank **(2).**

3. The wood screw as claimed in claim 1, **characterized in that** each cutting tooth **(210)** has a crest portion **(2101)** which is wider than a crest portion **(201)** of the threads **(20).**

4. The wood screw as claimed in claim 1, **characterized in that** the ribs **(23)** start from a first end of the shank **(2)** and the first end of the shank **(2)** is connected with the head **(1),** and the ribs **(23)** terminate before the screw-in portion **(21).**

## Patentansprüche

1. Eine Holzschraube mit:
einem Kopf (1) und einem mit dem Kopf (1) verbundenen Schaft (2), wobei der Schaft (2) ein Einschraubteil (21) umfasst, das einen sich verjüngenden Abschnitt und eine Spitze an einem distalen Ende des sich verjüngenden Abschnitts umfasst, eine Vielzahl von Gewinden (20), die auf einer Außenperipherie des Schafts (2) einschließlich des Einschraubteils (21) ausgebildet sind, eine Vielzahl von Schneidezähnen (210), die auf den Gewinden (20) auf dem Einschraubteil (21) ausgebildet sind, eine Vielzahl von Rippen (23), die von einer Außenperipherie des Schafts (2) aus verlaufen und sich zwischen den Gewinden (20) befinden, und eine Nut (22), die in Längsrichtung in dem Schaft (2) definiert ist, mit zwei Schnittkanten (220), die auf zwei Seiten der Nut (22) ausgebildet sind, und **gekennzeichnet dadurch, dass** sich die Nut (22) von einem der äußersten Schneidezähne (210) von dem Spitzenpunkt ausgehend bis zum Kopf (1) hin erstreckt.

2. Die Holzschraube nach Anspruch 1, **gekennzeichnet dadurch, dass** die Rippen (23) spiralförmig von der Außenperipherie des Schafts (2) aus verlaufen.

3. Die Holzschraube nach Anspruch 1, **gekennzeichnet dadurch, dass** jeder Schneidezahn (210) ein Spitzenteil (2101) aufweist, das breiter ist als ein Spitzenteil (201) der Gewinde (20).

4. Die Holzschraube nach Anspruch 1, **gekennzeichnet dadurch, dass** die Rippen (23) von einem ersten Ende des Schafts (2) ausgehen und das erste Ende des Schafts (2) mit dem Kopf (1) verbunden ist und die Rippen (23) vor dem Einschraubteil (21) enden.

## Revendications

1. Vis à bois comprenant :
. une tête (1) et une tige (2) reliée à la tête (1), dans laquelle la tige (2) comporte une zone à visser (21) qui présente une partie effilée et une pointe à l'extrémité distale de la partie en effilée,
. une pluralité de filetages (20) conformés sur le pourtour de la tige (2), y compris sur la zone à visser (21),
. une pluralité de dents de coupe (210) conformées sur les filetages (20) sur la zone à visser (21),
. une pluralité de nervures (23) s'étendant sur le pourtour externe de la tige (2) et situées entre les filetages (20), et
. une rainure (22) conformée longitudinalement dans la tige (2) et présentant deux bords de coupe (220) conformés sur les deux faces de la rainure (22),
**caractérisée en ce que** la rainure (22) commence au niveau de la dent de coupe (210) la plus éloignée de la partie effilée et **en ce qu'**elle s'étend en direction de la tête (1).

2. Vis à bois selon la revendication 1, **caractérisée en ce que** les nervures (23) s'étendent en spirale sur le pourtour externe de la tige (2).

3. Vis à bois selon la revendication 1, **caractérisée en ce que** chaque dent de coupe (210) présente une partie en crête (2101) qui est plus large que la partie en crête (201) des filetages (20).

4. Vis à bois selon la revendication 1, **caractérisée en ce que** les nervures (23) commencent à une première extrémité de la tige (2), **en ce que** la première extrémité de la tige (2) est reliée à la tête (1), et **en ce que** les nervures (23) se terminent avant la zone à visser (21).
